# EUROPEAN PATENT SPECIFICATION

(11) **EP 3 760 806 B1**
(45) Date of publication and mention of the grant of the patent: **16.02.2022**
(21) Application number: 20183396.9
(22) Date of filing: 01.07.2020
(51) Int. Cl.: E04D 13/10, E04D 13/12, E04G 21/32, F24S 25/615, F24S 25/636, H02S 20/23

(54) **FASTENING DEVICE, ARRANGEMENT AND METHOD OF MOUNTING ACCESSORY DEVICES**
BEFESTIGUNGSVORRICHTUNG, ANORDNUNG UND VERFAHREN ZUR MONTAGE VON ZUBEHÖRVORRICHTUNGEN
DISPOSITIF DE FIXATION, AGENCEMENT ET PROCÉDÉ DE MONTAGE DE DISPOSITIFS ACCESSOIRES

(30) Priority: 02.07.2019 FI 20195602
(43) Date of publication of application: 06.01.2021
(73) Proprietor: Piristeel Oy, 62200 Kauhava (FI)
(72) Inventor: Mäkipernaa, Marko, 62200 Kauhava (FI)
(74) Representative: Papula Oy

(56) References cited:
- WO-A2-2011/106602
- CH-A- 204 783
- US-A1- 2004 134 151
- US-A1- 2005 102 958
- US-B1- 6 256 934

## Description

### Background of the invention

The invention relates to a fastening device intended for fastening accessory devices and structures on a cladding structure of a building. The fastening device is mounted to a standing seam structure of the cladding formed of adjacent metallic panels.

The invention further relates to an arrangement and a method for mounting accessory structures on a cladding of a building.

The field of the invention is defined more specifically in the preambles of the independent claims.

Separate structures, such as roof bridges, snow barriers and roof ladders, are traditionally installed on a standing seam of a metal roof by attaching them to the standing seam by using a frame and a fastener so that the standing seam is clamped between the frame and the fastener. There are also solutions wherein a local deformation is formed to the standing seam when clamping the fastening means. Documents EP-3176343-A1 and JP-2011236611-A as well as CH-204783-A, US-2005/102958-A1, WO-2011/106602-A2 and US-2004/134151-A1 disclose some prior art solutions. However, the present solutions have shown to contain some disadvantages.

### Brief description of the invention

An object of the invention is to provide a novel and improved fastening device, arrangement and method for mounting accessory structures and devices on a cladding of a building.

The invention provides a fastening device according to claims 1 to 10, an arrangement according to claim 11 and a method of mounting according to claims 12 to 14.

An idea of the disclosed solution is that the fastening device is intended to be fastened to a standing seam of adjacent panels of a cladding of a building. When the fastening device is mounted, a local deformation is formed to the standing seam. The fastening device comprises a bracket for providing support for the accessory structure and a support element for mounting the bracket to the standing seam. Further, there are one or more force elements which are configured to generate needed fastening forces. The bracket is provided with one or more protrusions facing towards the seam. When the protrusion of the bracket is forced against the standing seam under influence of the generated fastening force, the local deformation to the standing seam occurs. Further, the support element comprises two branches whereby the bracket and the seam are mounted between the branches. The bracket is moved in transverse direction towards the seam when the force element is actuated. In other words, the at least one protrusion of the bracket is configured to be pushed against the standing seam under force of the force element and to cause deformation to the standing seam.

An advantage of the disclosed solution is that mounting of the fastening device is easy and quick. Thereby mounting work efficiency can be greatly improved. Further, the disclosed configuration allows forming very firm fastening with relatively low mounting forces. A further advantage of the disclosed solution is that manufacture of the disclosed fastening device is easy and inexpensive.

According to an embodiment, the mentioned cladding is a roof cladding fixed on a roof of a building. The roof cladding is formed of several metallic roof panels.

According to an embodiment, the mentioned cladding is a wall cladding fixed to the outside of a building. The wall cladding is formed of several metallic wall panels. The wall panels may be mounted vertically or they may inclined.

According to an embodiment, the standing seam means a seam direction of which is transverse relative to direction of surface of the connected elements. The standing seam protrudes a distance from the outer surface of the panels.

According to an embodiment, the standing seam, which may also be called in this document as a seam, connects metal cladding panels or sheets, which panels may comprise preformed shape locking elements at their longitudinal edges. The shape locking elements are mountable one above another and may then form a snap lock. Thus, the mounting of the seam may be tool free. The seam may be also called as a snap lock seam. The disclosed protrusion of the bracket may deform the seam relatively easily, because the structure of the seam comprises several material layers and void spaces between the layers when seen in lateral direction.

According to an embodiment, the standing seam may be formed by folding edges of the panels on site by means of a portable folding machine. This type of seam structure is known also as a traditional tinsmith roof seam.

According to an embodiment, the protrusion of the bracket may penetrate into the structure of the seam and may form shape locking between the bracket and the standing seam. This way a firm and durable fastening can be formed. The forcedly moved protrusion may shape the seam so that there are partly inside each other pressed portions which form shape locking elements.

According to an embodiment, the mentioned deformation of the seam may comprise bending, bulging, buckling and yielding of the components or portions of the seam.

According to an embodiment, the bracket is made of plate-like material and the protrusion of the bracket is a bulged portion. This way, the protrusion is an integrated inseparable part of the bracket. The materials of the protrusion and the bracket are naturally the same. An advantage of this solution is that the structure may be robust.

According to an embodiment, the protrusion is made by utilizing normal sheet metal work machines and methods. The protrusion may be made by means of pressing. An advantage is that the structure is quick and inexpensive to manufacture.

According to an embodiment, the force element and the protrusion are vertically aligned. In other words, the force element and the protrusion of the bracket are located at the same distance from the top of the standing seam. An advantage of this solution is that the fastening force generated by the force element is directed directly on opposite site of the protrusion. Then greater fastening forces may be directed to the protrusions. Since the fastening forces are directed properly, one force element may be sufficient.

According to an embodiment, the force element is a screw and the support element comprises a threaded screw hole for the screw. An advantage of this solution is that the screw is a reliable and inexpensive force element. The screw is also easy to use and allows generating great forces. Magnitude of the generated force is also easy to adjust.

According to an embodiment, operation of the force element is based on wedge surfaces. Any other suitable mechanical force generating element or device may also be used for moving the bracket and causing the local deformation.

According to an embodiment, a separate mounting or pressing device is used for generating the needed force for the deformation. The separate mounting device may be an electrically, pneumatically or hydraulically powered hand tool, for example.

According to an embodiment, the second branch of the support element comprises a receiving hole on a same transverse line with the force element locating at the first branch. In other words, the receiving hole is located opposite to the force element. Diameter of the receiving hole is dimensioned to be greater than diameter of the force element. An advantage of this is the receiving hole allows material of the vertical seam to enter at least partly inside the receiving hole when the fastening force pushes the protrusion against the seam. In this embodiment the receiving hole and the force element serve as a co-operating pair for producing the desired deformation to the bracket. When material of the seam is forced inside the receiving hole, then shape locking is formed between the seam and the support element.

According to an embodiment, the force element may be considered to serve as a plunger and the above disclosed receiving hole may serve as a die. Together they are able to produce the desired deformation for the seam. It is also possible to design desired shapes and dimensions for the said plunger and die and to thereby adjust the deformation process and its end result. The receiving hole may provide controlled shaping for the material of the seam.

According to an embodiment, the fastening device comprises one bracket and two or more support elements located at a distance from each other. Then, each of the support elements are provided with one force element and the bracket comprises one protrusion at each support element. In basic cases the number of supports elements of the fastening device is two.

According to an embodiment, the bracket comprises a fastening opening through which the support element may penetrate. When the support element is mounted to the bracket, the support element extends to both lateral sides of the bracket. Thanks to the fastening opening the support element stays connected to the bracket during the mounting and handling of the fastening device. A further advantage is that lengths of the branches may be reasonable.

According to an embodiment, the fastening device is in accordance with the previous embodiment and further comprises a clearance between the fastening opening and the support element. An advantage of the proper clearance is that it facilitates movement of the bracket relative to the support element.

According to an embodiment, the mentioned fastening opening may have a relatively narrow rectangular shape corresponding to a cross sectional profile of the support element.

According to an embodiment, the bracket is without the above mentioned fastening opening. Instead, the support element may be arranged on a portion of the bracket. In other words, the support element does not penetrate through the bracket but may simply pass it from above. However, the bracket may comprise a lowered portion at the support element so that the support element may easily extend over the lowered portion.

According to the invention, the support element is a longitudinal bar-like piece cross section of which resembles an inverted letter U wherein the parallel branches are connected by means of a transverse connecting part. In other words, the first and second branches of the U-shaped support element are parallel with a central line of the seam and their distal ends are facing towards the surface of the cladding. The support elements may be formed by cutting pieces with desired lengths from a profile bar, whereby manufacturing of the support pieces is efficient. Alternatively, desired U-shaped support elements may be formed by means of pressing tools.

According to an embodiment, the support element is configured to be supported on a top surface of the seam. This embodiment may facilitate and quicken the mounting. The fastening device may be dimensioned so that it will always be set automatically to a proper mounting position relative to the seam.

According to an embodiment, the support element comprises a connecting part in transverse direction relative to the vertical seam, and the connecting part is supportable against an upper surface of the seam. An advantage of this embodiment is that mounting is facilitated when the connecting part is supported on the top part of the seam. The connecting part provides support for the bracket, whereby the entire arrangement is correctly supported on the seam. The mounting may also be more stable and firm when the support element rests against the top of the standing seam.

According to an embodiment, the support element and the bracket are dimensioned to extend in the direction of the seam at a distance from the upper surface of the metallic cladding panels. In other words, the fastening device is located at a distance from an upper surface of the roof or wall surface. Then the mounting of the fastening device does not cause damages to the cladding, and further, stacking of impurities between the fastening device and the cladding may be decreased.

According to an embodiment, when the branches of the support element and the lower portion of the bracket extending downwards from the connecting part are dimensioned properly, their lower ends are above the outer surface of the roof or wall surface.

According to an embodiment, when length of the standing seam is short, then the fastening device may be dimensioned to extend against the upper surfaces of the adjacent panels. In other words, the branches and the bracket may be supported against the upper surface of the cladding. This way a further support may be provided for the disclosed arrangement.

According to an embodiment, the bracket, the one or more support elements and the fastening elements are configured to from a mounting set, wherein the components are pre-connected to each other before the actual roof mounting. An advantage of the solution is that all the needed components are in one mounting set and dropping of the components is prevented. Thus, mounting efficiency may be improved.

According to an embodiment, the disclosed solution relates to an arrangement for mounting an accessory structure on a cladding of a building. The arrangement comprises standing seams between adjacent metallic elements of the cladding and one or more accessory structures, each of which is mounted by means of at least two fastening devices to the standing seams. The fastening device is in accordance with any one of the preceding embodiments and the one or more accessory structures are mounted to upper portions of plate like brackets of the fastening devices.

According to an embodiment, the accessory structure may be a safety device, which can be one of the following: roof bridge, snow barrier, roof ladders, service bridge, ladders.

According to an embodiment, the accessory structure may be a mounting device or structure of a solar panel or solar thermal collector. It may be possible to mount body of the solar panel or the thermal collector directly to the bracket.

According to an embodiment, the disclosed solution relates to a method of mounting an accessory structure on a cladding of a building. The method comprises fastening two or more fastening devices to a metallic structure of the cladding so that they are located at a distance from each other. The fastening devices are fastened to standing seams which are located between adjacent metallic roof or wall panels. Each fastening device comprises a bracket, support element and force element. The accessory structure, such as a safety device or energy collecting apparatus, is fastened to the plate-like brackets of the fastening devices. Each bracket is provided with at least one protrusion facing towards dedicated seams and the bracket is moved during the mounting relative to the support element and the seam by means of the force element. The bracket and its protrusion is forced against the seam. Then the protrusion causes local deformation to the vertical seam.

According to an embodiment, the support element stays immovable during the tightening and only the bracket is moved.

According to an embodiment, fastening force generated by the force element is directed perpendicularly and directly to the portion of the bracket which is provided with the protrusion. An advantage of this embodiment is that the forces are directed properly, whereby reasonable forces are sufficient to cause the desired deformation.

According to an embodiment, direction of the force element is unchanged for the duration of the tightening. Also this feature improves efficiency of production of the fastening forces and may also facilitate the mounting.

According to an embodiment, supporting the fastening device vertically on a top surface of the seam and preventing the fastening device from contacting upper surfaces of the metallic panels. This embodiment may be useful when there is a need to protect the panels.

The above disclosed embodiments may be combined in order to form suitable solutions having those of the above features that are needed.

### Brief description of the figures

Some embodiments are described in more detail in the accompanying drawings, in which
Figure 1 is a schematic side view of a fastening device before tightening and seen in a direction of a standing seam,
Figure 2 is a schematic side view of the fastening device after being tightened,
Figures 3 - 6 are schematic views of a fastening device seen in different view angles,
Figure 7 is a schematic diagram showing some possible accessory structures, and
Figure 8 is a schematic side view of an alternative fastening device wherein mounting of support elements differs from the previous Figures.

For the sake of clarity, the figures show some embodiments of the disclosed solution in a simplified manner. In the figures, like reference numerals identify like elements.

### Detailed description of some embodiments

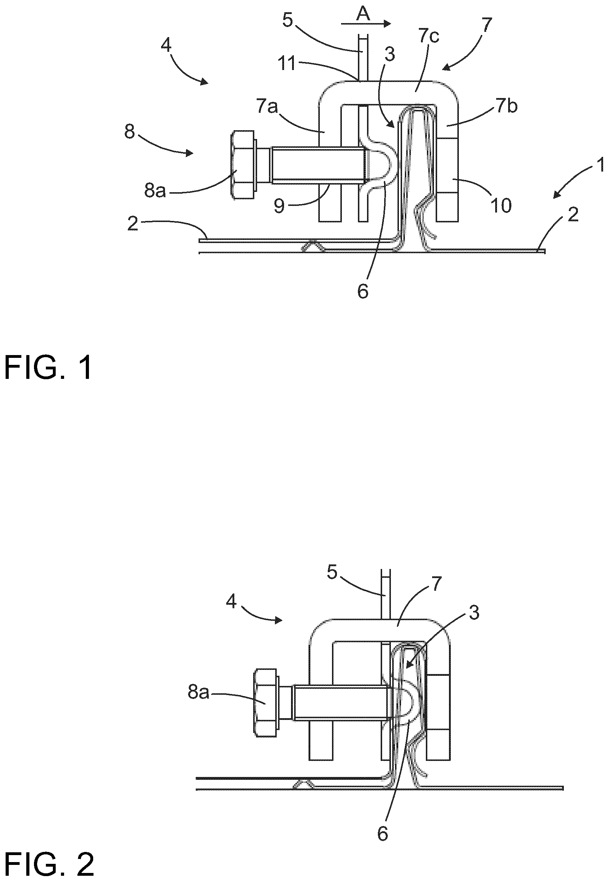

Figure 1 shows a part of a cladding 1 of a building, wherein the cladding 1 comprises several adjacent metallic surface panels 2 and standing seams 3 between them. The seam 3 forms a protruding structure and is transverse relative to an outer surface of the cladding 1. The seam 3 may comprise quick coupling means or snap locking, as it is shown in Figure 1.

A fastening device 4 may be mounted to the standing seam 3. The fastening device 4 comprises a bracket 5, which may be a plate like structure. The bracket 5 is for providing support for mounting desired accessory structures. In Figures 1, 2 and 8 an upper portion of the bracket 5 is not shown since the upper portion may be designed and dimensioned case by case depending on the accessory structure, for example. Thus, the upper part of the bracket may comprise one or more flanges, openings, screw holes and support surfaces. At a lower portion of the bracket 5 there is a protrusion 6 facing towards the seam 3. The protrusion 6 may be a bulged part of the bracket 5. However, the protrusion 6 may be any other kind of protruding element and number of the protrusion may be more than one.

The fastening device 4 further comprises a support element 7 intended for mounting the bracket to the seam 3. The support element 7 is provided with a force element 8, which may be a screw 8a, for example. Then the support element 7 may be provided with a threaded opening 9 for receiving the screw 8a. As can be seen, the force element 8 and the protrusion 6 may be aligned. The support element 7 comprises a first branch 7a, a second branch 7b and a connecting part 7c transverse to the branches 7a, 7b. Thus, shape of the support element 7 may resemble an inverted U-letter. The second branch 7b may comprise a receiving hole 10, which may be aligned with the force element 8 and the protrusion 6, and may receive material of the seam 3 when local deformation to the seam 3 is caused by pushing the protrusion by means of the force element 8 against the seam 3. Figure 2 illustrates the situation after the fastening screw 8a has been tightened.

The bracket 5 is provided with a fastening opening 11 through which the support element 7 penetrates so that the bracket 5 and the seam 3 may be located between the braches 7a, 7b. Further, there may be a clearance between the connecting part 7c and the fastening opening 11. During the tightening process the bracket 5 is forced to move A towards the seam 3 and the support element 7 stays immovable. The mentioned clearance facilitates the movement of the bracket 5.

Further, the force element 8 and the protrusion 6 of the fastening device 4 may alternatively be positioned on the opposite side of the seam 3, i.e. in Figures 1 and 2 on the right side of the seam 3.

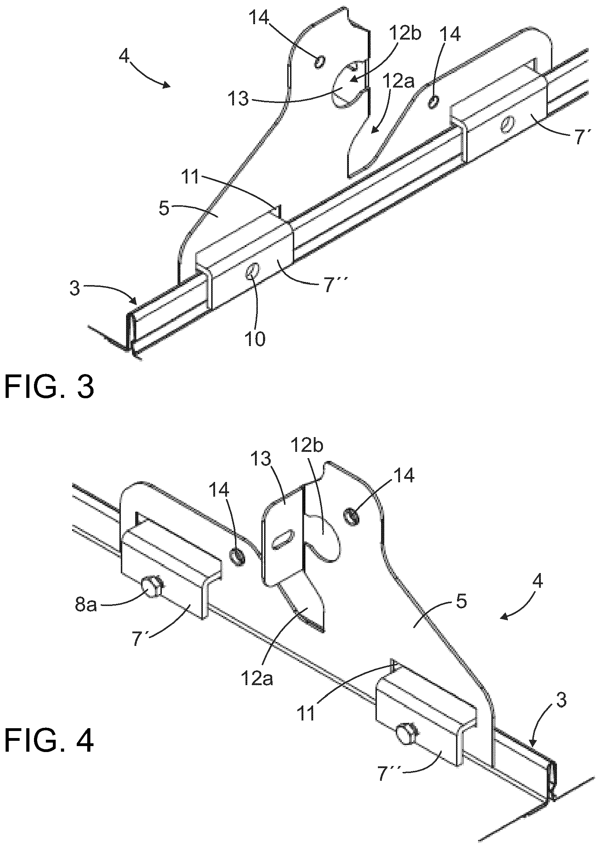

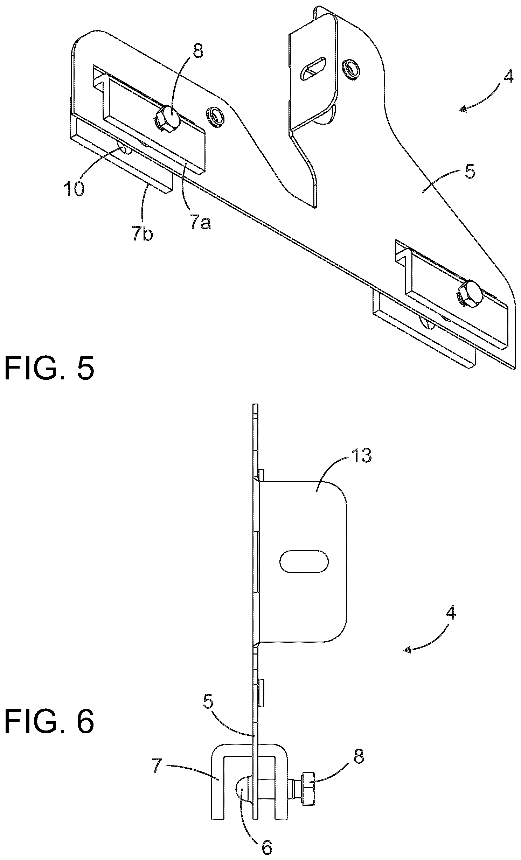

Figures 3 - 6 disclose a fastening device 4 comprising two support elements 7' and 7" at a distance from each other. Basic structure and operation of the support elements 7'and 7" may be in accordance with the details disclosed in Figures 1 and 2. As can be noted, upper portion of the bracket 5 may comprise openings 12a, 12b for receiving the accessory structures. The accessory structure may comprise one or more bars or pins, which are mountable to the openings 12a, 12b. The upper part of the bracket 5 may also comprise a mounting flange 13 and mounting holes 14 for different mounting purposes. The upper part of the bracket 5 may comprise one single mounting system or it may comprise two or more alternative mounting systems.

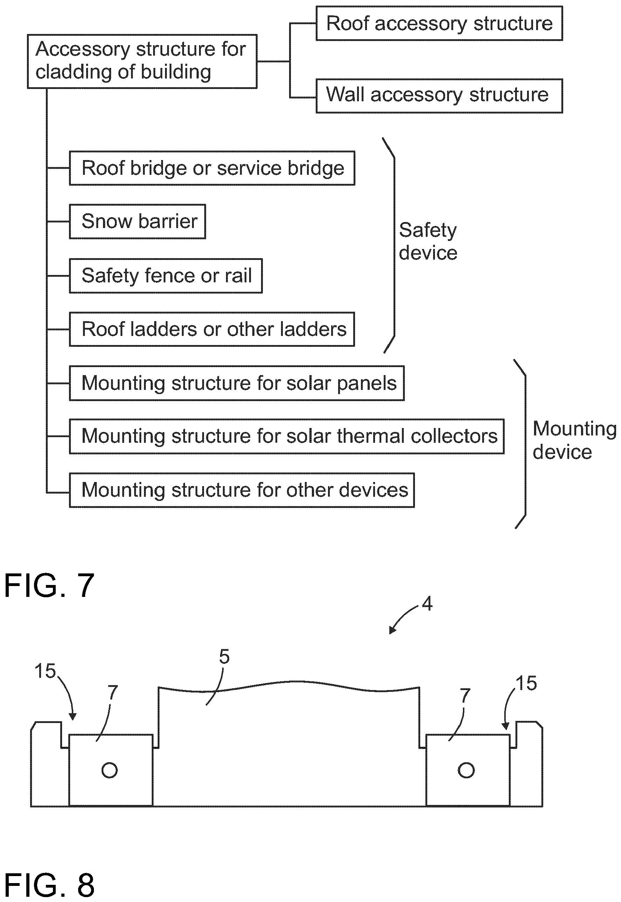

Figure 7 discloses a diagram showing that the disclosed fastening device may be designed for fastening roof and wall accessory structures and devices. Further, the accessory device may be a safety device or a mounting device. Some practical examples of the accessory devices are also disclosed.

Figure 8 discloses a solution, wherein the bracket 5 comprises lowered sections 15 at the support elements 7 so that the support elements 7 may be mounted on the lowered portions and no through openings are needed for them. The support element 7 extends on both sides of the seam and comprises a first branch and a second branch. The basic structure and the operating principle may still be the same as in Figures 1 - 6.

The drawings and the related description are only intended to illustrate the idea of the invention. In its details, the invention may vary within the scope of the claims.

## Claims

1. A fastening device (4) for mounting an accessory structure on a cladding of a building and wherein the cladding comprises metallic elements (2) and standing seams (3) between the adjacent elements (2);
and wherein the fastening device (4) comprises:
a bracket (5) for providing support for the accessory structure;
a support element (7) for mounting the bracket (5) to the standing seam (3);
at least one force element (8) actuation of which is configured to generate fastening force;
the bracket (5) is configured to be moved (A) in transverse direction towards the standing seam (3) in response to the actuation of the force element (8); and
the support element (7) comprises a first branch (7a) and a second branch (7b), and the bracket (5) and the standing seam (3) are mountable between the branches (7a, 7b) ;
**characterized in that**
the bracket (5) is provided with at least one protrusion (6) facing transversally towards a lateral side of the standing seam (3) and is configured the generate a local deformation to the standing seam (3) when the protrusion (6) is forced against the standing seam (3) under influence of the fastening force;
and wherein the support element (7) is a longitudinal bar-like piece cross section of which resembles an inverted letter U wherein the parallel first branch (7a) and second branch (7b) are connected by means of a transverse connecting part (7c).

2. The device as claimed in claim 1, **characterized in that**
the bracket (5) is made of plate-like material and the protrusion (6) of the bracket (5) is a bulged portion.

3. The device as claimed in claim 1 or 2, **characterized in that**
the force element (8) and the protrusion (6) are aligned.

4. The device as claimed in any one of the preceding claims 1 - 3, **characterized in that**
the force element (8) is a screw (8a) and the support element (7) comprises a threaded screw hole (9) for the screw (8a).

5. The device as claimed in claim any one of the preceding claims 1 - 4, **characterized in that**
the second branch (7b) of the support element (7) comprises a receiving hole (10) on a same transverse line with the force element (8), and wherein diameter of the receiving hole (10) is dimensioned to be greater than diameter of the force element (8), whereby the receiving hole (10) allows material of the seam (3) to enter at least partly inside the receiving hole (10) in response to directing the fastening force to the protrusion (6).

6. The device as claimed in any one of the preceding claims 1 - 5, **characterized in that**
the fastening device (4) comprises one bracket (5) and at least two support elements (7', 7") located at a distance from each other and wherein each of the support elements (7', 7") are provided with one force element (8); and
the bracket (5) comprises one protrusion (6) at each support element (7', 7").

7. The device as claimed in any one of the preceding claims 1 - 6, **characterized in that**
the bracket (5) comprises a fastening opening (11) through which the support element (7) is mountable to the bracket (5) so that the support element (7) extends to both lateral sides of the bracket (5).

8. The device as claimed in any one of the preceding claims 1 - 7, **characterized in that**
the support element (7) is configured to be supported on a top surface of the seam (3).

9. The device as claimed in any one of the preceding claims 1 - 8, **characterized in that**
the support element (7) and the bracket (5) are dimensioned to extend transversally at a distance from the upper surface of the metallic panels (2).

10. The device as claimed in any one of the preceding claims 1 - 9, **characterized in that**
the bracket (5), the at least one support element (7) and the at least one force element (8) are configured to from a mounting set, wherein the components are pre-connected to each other before the actual mounting.

11. An arrangement for mounting an accessory structure on a cladding of a building, wherein the arrangement comprises:
standing seams (3) between adjacent metallic elements (2) of the cladding;
at least one accessory structure; and
at least two fastening devices (4) mounted to the standing seams (3) locating at a distance from each other;
**characterized in that**
the fastening device (4) is in accordance with any one of the preceding claims 1 - 10;
and wherein the accessory structure is mounted on upper portions of plate like brackets (5) of the fastening devices (4).

12. A method of mounting an accessory structure on a cladding of a building,
wherein the method comprises:
fastening at least two fastening devices (4) to a metallic structure of the cladding and at a distance from each other;
fastening the fastening devices (4) to standing seams (3) which are located between adjacent metallic panels (2) ;
providing each fastening device (4) with a bracket (5), support element (7) and force element (8);
mounting the accessory structure to the plate-like brackets (5) of the at least two fastening devices (4);
providing the support element (7) with a first branch (7a) and a second branch (7b) and mounting the bracket (5) and the standing seam (3) between of the branches (7a, 7b);
moving (A) the bracket (5) during the mounting relative to the support element (7) and the seam (3) by means of the force element (8);
**characterized by**
providing each bracket (5) with at least one protrusion (6) facing towards dedicated seams (3);
pushing the protrusion (6) against the seam (3) thereby causing local deformation to the seam (3);
and using the support element (7) which is a longitudinal bar-like piece cross section of which resembles an inverted letter U wherein the parallel first branch (7a) and second branch (7b) are connected by means of a transverse connecting part (7c).

13. The method as claimed in claim 12, **characterized by**
directing fastening force generated by the force element (8) perpendicularly and directly to the portion of the bracket (5) which is provided with the protrusion (6).

14. The method as claimed in claim 12 or 13, **characterized by**
supporting the fastening device (4) on a top surface of the seam (3) and preventing the fastening device (4) from contacting upper surfaces of the panels (2).

## Patentansprüche

1. Befestigungsvorrichtung (4) zum Anbringen einer Zubehörstruktur auf einer Gebäudeverkleidung und wobei die Verkleidung Metallelemente (2) und Stehfalze (3) zwischen den benachbarten Elementen (2) umfasst;
und wobei die Befestigungsvorrichtung (4) umfasst:
eine Halterung (5) zum Bereitstellen einer Stütze für die Zubehörstruktur;
ein Stützelement (7) zum Anbringen der Halterung (5) am Stehfalz (3);
wenigstens ein Kraftelement (8), wobei dessen Betätigung konfiguriert ist, um eine Befestigungskraft zu erzeugen;
wobei die Halterung (5) dazu ausgebildet ist, bei Betätigung des Kraftelementes (8) in Querrichtung zum Stehfalz (3) hin bewegt zu werden (A); und
wobei das Stützelement (7) einen ersten Schenkel (7a) und einen zweiten Schenkel (7b) umfasst und die Konsole (5) und der Stehfalz (3) zwischen den Schenkeln (7a, 7b) montierbar sind;
**gekennzeichnet dadurch,**
**dass** die Halterung (5) mit wenigstens einem Vorsprung (6) versehen ist, der quer zu einer seitlichen Seite des Stehfalzes (3) gewandt ist und so konfiguriert ist, dass er eine lokale Verformung des Stehfalzes (3) erzeugt, wenn der Vorsprung (6) unter Einfluss der Befestigungskraft gegen den Stehfalz (3) gedrückt wird;
und wobei das Stützelement (7) ein längliches stabartiges Stück ist, dessen Querschnitt einem umgekehrten U ähnelt, wobei der parallele erste Schenkel (7a) und der parallele zweite Schenkel (7b) mittels eines quer verlaufenden Verbindungsteils (7c) verbunden sind.

2. Vorrichtung nach Anspruch 1, **dadurch gekennzeichnet, dass**
die Halterung (5) aus plattenartigem Material besteht und der Vorsprung (6) der Halterung (5) ein ausgebauchter Abschnitt ist.

3. Vorrichtung nach Anspruch 1 oder 2, **dadurch gekennzeichnet, dass**
das Kraftelement (8) und der Vorsprung (6) gemeinsam ausgerichtet sind.

4. Vorrichtung nach einem der vorhergehenden Ansprüche 1 - 3, **dadurch gekennzeichnet, dass**
das Kraftelement (8) eine Schraube (8a) ist und das Stützelement (7) eine Gewindebohrung (9) für die Schraube (8a) aufweist.

5. Vorrichtung nach einem der vorhergehenden Ansprüche 1 - 4, **dadurch gekennzeichnet, dass**
der zweite Schenkel (7b) des Stützelements (7) ein Aufnahmeloch (10) auf einer gleichen Querlinie mit dem Kraftelement (8) umfasst und wobei der Durchmesser des Aufnahmeloches (10) größer als der Durchmesser des Kraftelementes (8) bemessen ist, wobei das Aufnahmeloch (10) es ermöglicht, dass das Material des Falzes (3) wenigstens teilweise in das Aufnahmeloch (10) eindringt, wenn die Befestigungskraft auf den Vorsprung (6) gerichtet wird.

6. Vorrichtung nach einem der vorhergehenden Ansprüche 1 - 5, **dadurch gekennzeichnet, dass**
die Befestigungsvorrichtung (4) eine Halterung (5) und wenigstens zwei Stützelemente (7', 7'') umfasst, die in einem Abstand voneinander angeordnet sind und wobei jedes der Stützelemente (7', 7'') mit einem Kraftelement (8) versehen ist; und
die Halterung (5) an jedem Stützelement (7', 7'') einen Vorsprung (6) aufweist.

7. Vorrichtung nach einem der vorhergehenden Ansprüche 1 - 6, **dadurch gekennzeichnet, dass**
die Halterung (5) eine Befestigungsöffnung (11) aufweist, durch die das Stützelement (7) an der Halterung (5) befestigbar ist, so dass sich das Stützelement (7) bis zu beiden seitlichen Seiten der Halterung (5) erstreckt.

8. Vorrichtung nach einem der vorhergehenden Ansprüche 1 - 7, **dadurch gekennzeichnet, dass**
das Stützelement (7) so konfiguriert ist, dass es auf einer oberen Fläche des Falzes (3) abgestützt wird.

9. Vorrichtung nach einem der vorhergehenden Ansprüche 1 - 8, **dadurch gekennzeichnet, dass**
das Stützelement (7) und die Halterung (5) so bemessen sind, dass sie sich quer in einem Abstand von der Oberseite der Metallplatten (2) aus erstrecken.

10. Vorrichtung nach einem der vorhergehenden Ansprüche 1 - 9, **dadurch gekennzeichnet, dass**
die Halterung (5), das wenigstens eine Stützelement (7) und das wenigstens eine Kraftelement (8) zu einem Montagesatz konfiguriert sind, wobei die Komponenten vor der eigentlichen Montage miteinander vorverbunden werden.

11. Anordnung zum Anbringen einer Zubehörstruktur an einer Verkleidung eines Gebäudes, wobei die Anordnung umfasst:
Stehfalze (3) zwischen benachbarten metallischen Elementen (2) der Verkleidung;
wenigstens eine Zubehörstruktur; und
wenigstens zwei im Abstand zueinander an den Stehfalzen (3) angebrachte Befestigungsvorrichtungen (4);
**dadurch gekennzeichnet, dass**
die Befestigungsvorrichtung (4) einem der vorhergehenden Ansprüche 1 - 10 entspricht;
und wobei die Zubehörstruktur an oberen Abschnitten von plattenartigen Halterungen (5) der Befestigungsvorrichtungen (4) angebracht ist.

12. Verfahren zum Anbringen einer Zubehörstruktur an einer Verkleidung eines Gebäudes,
wobei das Verfahren umfasst:
Befestigen von wenigstens zwei Befestigungsvorrichtungen (4) an einer metallischen Struktur der Verkleidung und in einem Abstand zueinander;
Befestigen der Befestigungsvorrichtungen (4) an Stehfalzen (3), die sich zwischen benachbarten Metallplatten (2) befinden;
Versehen jeder Befestigungsvorrichtung (4) mit einer Halterung (5), einem Stützelement (7) und einem Kraftelement (8);
Anbringen der Zubehörstruktur an den plattenartigen Halterungen (5) der wenigstens zwei Befestigungsvorrichtungen (4);
Vorsehen des Stützelements (7) mit einem ersten Schenkel (7a) und einem zweiten Schenkel (7b) und Anbringen der Halterung (5) und des Stehfalzes (3) zwischen den Schenkeln (7a, 7b);
Bewegen (A) der Halterung (5) während des Anbringens relativ zum Stützelement (7) und dem Falz (3) mittels des Kraftelements (8);
**gekennzeichnet durch**
Vorsehen jeder Halterung (5) mit wenigstens einem Vorsprung (6), der den vorgesehenen Falzen (3) zugewandt ist;
Drücken des Vorsprungs (6) gegen den Falz (3), wodurch eine lokale Verformung des Falzes (3) bewirkt wird;
und Verwenden des Stützelements (7), welches ein längliches stabähnliches Stück ist, dessen Querschnitt einem umgekehrten U ähnelt, wobei der parallele erste Schenkel (7a) und der parallele zweite Schenkel (7b) mittels eines quer verlaufenden Verbindungsteils (7c) verbunden sind.

13. Verfahren nach Anspruch 12, **gekennzeichnet durch**
Richten der vom Kraftelement (8) erzeugten Befestigungskraft senkrecht und direkt auf den Abschnitt der Halterung (5), die mit dem Vorsprung (6) versehen ist.

14. Verfahren nach Anspruch 12 oder 13, **gekennzeichnet durch**
Abstützen der Befestigungsvorrichtung (4) auf einer oberen Fläche des Falzes (3) und Verhindern, dass die Befestigungsvorrichtung (4) die oberen Oberflächen der Platten (2) berührt.

## Revendications

1. Dispositif de fixation (4) pour le montage d'une structure d'accessoire sur un bardage d'un bâtiment et dans lequel le bardage comprend des éléments (2) métalliques et des joints debouts (3) entre les éléments(2)adjacents;
et dans lequel le dispositif de fixation (4) comprend :
un support (5) pour fournir un maintien à la structure d'accessoire ;
un élément de maintien (7) pour monter le support (5) au niveau du joint debout (3);
au moins un élément de force (8) dont l'actionnement est configuré pour générer une force de fixation;
le support (5) est configuré pour être déplacé (A) dans une direction transversale vers le joint debout (3) en réponse à l'actionnement de l'élément de force (8); et
l'élément de maintien (7) comprend une première branche (7a) et une deuxième branche (7b), et le support (5) et le joint debout (3) sont aptes à être montés entre les branches (7a, 7b);
**caractérisé en ce que**
le support (5) est pourvu d'au moins une protubérance (6) orientée transversalement vers un côté latéral du joint debout (3) et est configuré pour générer une déformation locale au joint debout (3) lorsque la protubérance (6) est plaquée contre le joint debout (3) sous l'influence de la force de fixation;
et dans lequel l'élément de maintien (7) est une pièce en forme de barre longitudinale dont la section transversale ressemble à une lettre U inversée, dans lequel les première (7a) et deuxième (7b) branches parallèles sont reliées au moyen d'une partie de liaison transversale (7c).

2. Dispositif selon la revendication 1, **caractérisé en ce que**
le support (5) est fait d'un matériau en forme de plaque et la protubérance (6) du support (5) est une partie bombée.

3. Dispositif selon la revendication 1 ou 2, **caractérisé en ce que**
l'élément de force (8) et la protubérance (6) sont alignés.

4. Dispositif selon l'une quelconque des revendications précédentes 1 à 3, **caractérisé en ce que**
l'élément de force (8) est une vis (8a) et l'élément de maintien (7) comprend un trou fileté (9) pour la vis (8a).

5. Dispositif selon l'une quelconque des revendications précédentes 1 à 4, **caractérisé en ce que**
la deuxième branche (7b) de l'élément de maintien (7) comprend un trou de réception (10) sur une même ligne transversale que l'élément de force (8), et dans lequel le diamètre du trou de réception (10) est dimensionné pour être supérieur au diamètre de l'élément de force (8), selon lequel le trou de réception (10) permet au matériau du joint (3) d'entrer au moins partiellement à l'intérieur du trou de réception (10) en réponse à l'application de la force de fixation vers la protubérance (6).

6. Dispositif selon l'une quelconque des revendications précédentes 1 à 5, **caractérisé en ce que**
le dispositif de fixation (4) comprend un support (5) et au moins deux éléments de maintien (7', 7") situés à une distance l'un de l'autre et dans lequel chacun des éléments de maintien (7', 7") est pourvu d'un élément de force (8); et
le support (5) comprend une protubérance (6) au niveau de chaque élément de maintien (7', 7").

7. Dispositif selon l'une quelconque des revendications précédentes 1 à 6, **caractérisé en ce que**
le support (5) comprend une ouverture de fixation (11) à travers laquelle l'élément de maintien (7) est apte à être monté sur le support (5) de telle sorte que l'élément de maintien (7) s'étende des deux côtés latéraux du support (5).

8. Dispositif selon l'une quelconque des revendications précédentes 1 à 7, **caractérisé en ce que**
l'élément de maintien (7) est configuré pour être maintenu sur une surface supérieure du joint (3).

9. Dispositif selon l'une quelconque des revendications précédentes 1 à 8, **caractérisé en ce que**
l'élément de maintien (7) et le support (5) sont dimensionnés pour s'étendre transversalement à une distance de la surface supérieure des panneaux métalliques (2).

10. Dispositif selon l'une quelconque des revendications précédentes 1 à 9, **caractérisé en ce que**
le support (5), l'au moins un élément de maintien (7) et l'au moins un élément de force (8) sont configurés pour former un ensemble de montage, dans lequel les composants sont préassemblés entre eux avant le montage réel.

11. Agencement pour le montage d'une structure d'accessoire sur un bardage d'un bâtiment, dans lequel l'agencement comprend :
des joints debouts (3) entre des éléments métalliques adjacents (2) du bardage;
au moins une structure d'accessoire; et
au moins deux dispositifs de fixation (4) montés sur les joints debouts (3) situés à une distance l'un de l'autre;
**caractérisé en ce que**
le dispositif de fixation (4) est conforme à l'une quelconque des revendications précédentes 1 à 10 ;
et dans lequel la structure d'accessoire est montée sur des parties supérieures du support en forme de plaque (5) des dispositifs de fixation (4).

12. Procédé pour le montage d'une structure d'accessoire sur un bardage d'un bâtiment,
dans lequel le procédé comprend :
la fixation d'au moins deux dispositifs de fixation (4) à une structure métallique du bardage et à une distance l'un de l'autre ;
la fixation des dispositifs de fixation (4) à des joints debouts (3) qui sont situés entre des panneaux métalliques adjacents (2) ;
la fourniture de chaque dispositif de fixation (4) avec un support (5), un élément de maintien (7) et un élément de force (8) ;
le montage de la structure d'accessoire aux supports en forme de plaque (5) des au moins deux dispositifs de fixation (4) ;
la fourniture de l'élément de maintien (7) avec une première branche (7a) et une deuxième branche (7b) et le montage du support (5) et du joint debout (3) entre les branches (7a, 7b) ;
le déplacement (A) du support (5) pendant le montage par rapport à l'élément de maintien (7) et au joint(3) au moyen de l'élément de force (8);
**caractérisé par**
la fourniture de chaque support (5) avec au moins une protubérance (6) en regard des joints dédiés (3);
la poussée de la protubérance (6) contre le joint (3) provoquant ainsi une déformation locale du joint (3);
et l'utilisation de l'élément de maintien (7) qui est une pièce en forme de barre longitudinale dont la section transversale ressemble à une lettre U inversée, dans lequel les première (7a) et deuxième (7b) branches parallèles sont reliées au moyen d'une partie de liaison transversale (7c).

13. Procédé selon la revendication 12, **caractérisé par**
l'application de force de fixation générée par l'élément de force (8) perpendiculairement et directement vers la partie du support (5) qui est pourvue de la protubérance (6).

14. Procédé selon la revendication 12 ou 13, **caractérisé par**
le maintien du dispositif de fixation (4) sur une surface supérieure du joint (3) et l'empêchement du dispositif de fixation (4) d'être en contact avec les surfaces supérieures des panneaux (2).
